(19) Europäisches Patentamt
European Patent Office
Office européen des brevets

(11) **EP 4 723 001 A1**

(12) **EUROPEAN PATENT APPLICATION**

(43) Date of publication:
**08.04.2026 Bulletin 2026/15**

(21) Application number: **25184372.8**

(22) Date of filing: **23.06.2025**

(51) International Patent Classification (IPC):
**G06Q 10/047** (2023.01)   **G01C 21/34** (2006.01)
**G06N 3/006** (2023.01)   **G06N 3/045** (2023.01)
**G06N 20/00** (2019.01)   **G06Q 10/0631** (2023.01)
**G06Q 30/0201** (2023.01)   **G06Q 50/06** (2024.01)
**G06Q 50/40** (2024.01)   **G07C 5/00** (2006.01)
**G08G 1/00** (2006.01)

(52) Cooperative Patent Classification (CPC):
**G06Q 10/047; G01C 21/3407; G01C 21/343;
G06N 3/006; G06N 3/045; G06N 3/126;
G06N 20/00; G06Q 10/0631; G06Q 30/0201;
G06Q 50/06; G06Q 50/40; G08G 1/20**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **04.10.2024 IN 202421075239**

(71) Applicant: **Tata Consultancy Services Limited
Maharashtra (IN)**

(72) Inventors:
• **KUMAR, Anshu**
**560066 Bengaluru, Karnataka (IN)**
• **MISRA, Prasant Kumar**
**560066 Bengaluru, Karnataka (IN)**
• **MENON, Vishnu Padmakumar**
**411057 Pune, Maharashtra (IN)**
• **SARANGAN, Venkatesh**
**600113 Chennai, Tamil Nadu (IN)**

(74) Representative: **Goddar, Heinz J.
Boehmert & Boehmert
Anwaltspartnerschaft mbB
Pettenkoferstrasse 22
80336 München (DE)**

(54) **METHOD AND SYSTEM FOR ENERGY COST OPTIMIZATION FRAMEWORK FOR A LOGISTIC ENTERPRISE**

(57) The embodiments of the present disclosure herein address unresolved problems of cyclic dependency between cost of power procurement and routing of one or more electric vehicles (EVs) of a logistic enterprise. Embodiments herein provide a method and system for an optimization framework to overcome a cyclic dependency between cost of power procurement and routing of electric vehicles (EVs) of a logistic enterprise. The optimization framework comprises two independent routines, coupled through an exchange of parameter values. First routine optimizes routing cost of the EVs to satisfy delivery constraints by assuming that the average EV charging cost is known. This is given as input to a second routine that optimizes electricity procurement cost from different energy sources by assuming that the EVs routes are fixed. The output from the second routine is then given back as input to first routine, and the procedure iterates till a stopping criteria is reached.

FIG. 2

EP 4 723 001 A1

# EP 4 723 001 A1

**Description**

CROSS-REFERENCE TO RELATED APPLICATIONS AND PRIORITY

The present application claims priority from Indian patent application number 202421075239, filed on October 04, 2024.

TECHNICAL FIELD

The disclosure herein generally relates to the field of energy cost optimization, and more particularly, a method and system for an optimization framework to overcome a cyclic dependency between cost of power procurement and routing of one or more electric vehicles (EVs) of a logistic enterprise.

BACKGROUND

Energy has become a major concern for enterprises worldwide. A robust energy strategy is becoming increasingly important to make enterprise operations sustainable and more cost-effective. Managing the bill of energy without impacting business operations is a critical requirement for large enterprises.

Currently, the electricity demand in the logistic sector extends beyond conventional building loads to charging of electric vehicle (EV) fleets, which can not only be used for delivering goods, but also energy. Such an operations setup makes it difficult to ascertain the overall energy demand of the enterprise due to variability induced by EV charging that depends on vehicle routing for multi-service delivery requirements, which in turn depends on the cost of charging EVs within and outside the enterprise. This impacts the power procurement strategy in the presence of multiple sources including electricity markets with variable prices.

Portfolio optimization (PO) and EV charging/routing optimization have been extensively studied. Most PO models consider the uncertainty in power prices, but assume that the energy demand is known a priori, or can be forecasted using historical data of consumption profiles. Existing solutions propose PO models with EV and renewable energy to power a microgrid, where they considered power flow constraints, and uncertainty in renewable generation and EV charging-discharging. However, they do not model the routing constraints of the EV fleet required for multi-service delivery operations involving goods and energy. Most joint optimization models on EV charging and routing aim to reduce the charging cost and travel distance/time with constraints on the service time, vehicle loading capacity, battery capacity, charging rates, in addition to using different pricing schemes such as dynamic, time-of-use, event driven etc.

Furthermore, these works assume that the cost of electricity is independent of the EV charging demand. Besides, they do not consider utilization of parked EVs as a battery storage for reducing the electricity cost of an enterprise, i.e., charge when energy prices are lower from any of the given power sources, and discharge during periods of higher tariff to meet the enterprise demand.

SUMMARY

Embodiments of the present disclosure present technological improvements as solutions to one or more of the above-mentioned technical problems recognized by the inventors in conventional systems. For example, in one embodiment, a method for an optimization framework to overcome a cyclic dependency between cost of power procurement and routing of one or more electric vehicles (EVs) of a logistic enterprise is provided. The processor-implemented method includes collecting, via an Input/Output (I/O) interface, a plurality of data associated to a logistic enterprise, wherein the plurality of data comprising data related to cost of power procurement from one or more predefined energy sources, data related to one or more operations within the logistic enterprise, data related to an average cost of charging one or more electric vehicles (EVs) of the logistic enterprise, and data related to access of the logistic enterprise on one or more charging points for the one or more electric vehicles (EVs).

Further, the processor-implemented method includes configuring, via the one or more hardware processors, a first model based on a genetic algorithm (GA) for optimizing a routing cost of each of the one or more electric vehicles (EVs) to satisfy one or more delivery constraints and the average cost of charging of the one or more electric vehicles (EVs), configuring, via one or more hardware processors, a second model based on the genetic algorithm (GA) for optimizing the cost of the power procurement from the one or more predefined energy sources by utilizing the optimized routing cost of the one or more electric vehicles (EVs) from the first model, and jointly optimizing, via the one or more hardware processors, the cost of routing of the one or more electric vehicles (EVs) and cost of the power procurement from the one or more energy sources iteratively using a genetic algorithm (GA) based iterative framework.

In another embodiment, a system for an optimization framework to overcome a cyclic dependency between cost of power procurement and routing of one or more electric vehicles (EVs) of a logistic enterprise is provided. The system comprises a memory storing a plurality of instructions, one or more Input/Output (I/O) interfaces, and one or more hardware processors coupled to the memory via the one or more I/O interfaces. The one or more hardware processors are configured by the instructions to collect, via an Input/Output (I/O) interface, a plurality of data associated to a logistic enterprise, wherein the plurality of data comprising data related to cost of power procurement from one or more predefined energy sources, data related to one or more operations within the logistic enterprise, data related to an average cost of charging one or more electric vehicles (EVs) of the logistic enterprise, and data related to access of the logistic enterprise on one or more charging points for the one or more electric vehicles (EVs).

The one or more hardware processors are configured by the instructions to configure a first model based on a genetic algorithm (GA) for optimizing a routing cost of each of the one or more electric vehicles (EVs) to satisfy one or more delivery constraints and the average cost of charging of the one or more electric vehicles (EVs), a second model based on the genetic algorithm (GA) for optimizing the cost of the power procurement from the one or more predefined energy sources by utilizing the optimized routing cost of the one or more electric vehicles (EVs) from the first model, wherein each of the one or more EVs routes is fixed and jointly optimize the cost of routing of the one or more electric vehicles (EVs) and cost of the power procurement from the one or more energy sources iteratively using a genetic algorithm (GA) based iterative framework.

In yet another aspect, there are provided one or more non-transitory machine-readable information storage mediums comprising one or more instructions, which when executed by one or more hardware processors causes a method for an optimization framework to overcome a cyclic dependency between cost of power procurement and routing of one or more electric vehicles (EVs) of a logistic enterprise is provided. The processor-implemented method includes collecting, via an Input/Output (I/O) interface, a plurality of data associated to a logistic enterprise, wherein the plurality of data comprising data related to cost of power procurement from one or more predefined energy sources, data related to one or more operations within the logistic enterprise, data related to an average cost of charging one or more electric vehicles (EVs) of the logistic enterprise, and data related to access of the logistic enterprise on one or more charging points for the one or more electric vehicles (EVs).

Further, the processor-implemented method includes configuring, via the one or more hardware processors, a first model based on a genetic algorithm (GA) for optimizing a routing cost of each of the one or more electric vehicles (EVs) to satisfy one or more delivery constraints and the average cost of charging of the one or more electric vehicles (EVs), configuring, via one or more hardware processors, a second model based on the genetic algorithm (GA) for optimizing the cost of the power procurement from the one or more predefined energy sources by utilizing the optimized routing cost of the one or more electric vehicles (EVs) from the first model, and jointly optimizing, via the one or more hardware processors, the cost of routing of the one or more electric vehicles (EVs) and cost of the power procurement from the one or more energy sources iteratively using a genetic algorithm (GA) based iterative framework.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates a block diagram of a system for an energy cost optimization framework for a logistic enterprise, according to some embodiments of the present disclosure.

FIG. 2 is a functional block diagram illustrating the system of FIG. 1 for the energy cost optimization framework for the logistic enterprise, according to some embodiments of the present disclosure.

FIG. 3 is an exemplary flow diagram illustrating a processor-implemented method for the energy cost optimization framework for the logistic enterprise, according to some embodiments of the present disclosure.

DETAILED DESCRIPTION OF EMBODIMENTS

Exemplary embodiments are described with reference to the accompanying drawings. In the figures, the left-most digit(s) of a reference number identify the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

The electricity demand in the logistic sector extends beyond conventional building loads to charging of electric vehicle (EV) fleets. Such an operations setup makes it difficult to ascertain the overall energy demand of the enterprise due to variability induced by EV charging that depends on vehicle routing for multi-service delivery requirements, which in turn depends on the cost of charging EVs within and outside the enterprise. This impacts the power procurement strategy in the presence of multiple sources including electricity markets with variable prices. Joint optimization of power procurement and EV fleet routing for enterprises that exhibit cyclic dependency between source selection and energy demand is a problem.

Further, the power procurement cost optimization for a large logistic enterprise, which not only needs to manage energy for conventional building operations, but also delivery operations for moving goods and energy within the city using a fleet of electric vehicles (EV) is a task. The electricity demand depends on both (building and EV charging) loads. A portion of this charging demand can also be fulfilled off-premises at third-party charging points, but determining it is non-trivial due to constraints on goods delivery and charging price, thus, impacting the routing plan of the fleet.

On the other hand, the optimal electricity procurement plan (from one or more sources) can only be obtained only if the overall energy demand is known. A cyclic dependency, therefore, arises between source selection and vehicle routing. Such a case does not exist in conventional enterprise loads as they remain fixed to the enterprise location without the scope for demand offloading to external entities.

Embodiments herein provide a method and system for an energy cost optimization framework for a logistic enterprise. Herein, an iterative approach is proposed to overcome the cyclic dependency between the power procurement and EV fleet routing systems and jointly optimize them to minimize the overall expense for the enterprise. A genetic algorithm (GA) based iterative framework is used to achieve scalability. The solution quality of the GA framework is closely matches with that of the exact intractable Mixed-Integer Non-Linear Program (MINLP) solution at smaller scales.

In the MINLP, the optimization framework consists of two independent routines, coupled through the exchange of parameter values. In a first routine, distance travelled by the one or more EVs and cost of charge-discharge is optimized. It is given by:

$$u^R = min\{\sum_{i \epsilon v} \sum_{j \epsilon v} \sum_{u \epsilon x} d_{ij} \alpha_{ij}^u + C_{pr} \theta_i^u(0) +$$

$$\cdots + \sum_{u \epsilon x} \sum_{i \epsilon F} C_{ci} R_{ci}^u t_{ci}^u + \sum_{u \epsilon x} \sum_{i \epsilon P} C_{di} R_{di}^u t_{di}^u\} \qquad (1)$$

wherein, $d_{ij}$ is the distance between nodes $i$ and $j$;
$C_{ci}$ and $C_{di}$ are the procurement costs from third party charging and discharging nodes respectively (and are independent of the trading interval); $R_{ci}^u$ and $R_{di}^u$ are the EV charging and discharging rates respectively; and $\theta_i^u(0)$ is the initial amount of charge required for EV routing.

Equation (1) is subject to a plurality of constraints. Firstly, constraint one ensures that each customer node is served only once, while making it optional to visit other nodes as shown in equation (2):

$$\sum_{u \epsilon x} \sum_{j \epsilon V, i \neq j} \alpha_{ij}^u = 1 \qquad \forall i \in \kappa \qquad (2)$$

By equating the number of incoming and outgoing EVs at each node, Constraint two ensures that an EV visiting a node must leave that respective node as shown in equation (3).

$$\sum_{j \epsilon V, i \neq j} \alpha_{ij}^u = \sum_{j \epsilon V, i \neq j} \alpha_{ji}^u \qquad \forall i \in V, \forall u \in \chi \qquad (3)$$

Further, the constraint three guarantees demand fulfillment of all customers awaiting order delivery by computing the remaining cargo of the EVs while arriving at a customer node as shown in equation (4). $c_i$ is the goods demand at customer node $i$. $C$ is the total goods carrying capacity of EV $u$.

$$0 \leq \lambda_j^u \leq \lambda_i^u - c_i \alpha_{ij}^u + C(1 - \alpha_{ij}^u), \qquad \forall i, j \in V, \forall u \in \chi \qquad (4)$$

Constraint four ensures that each node must be visited by an EV within its defined service time window as mentioned in equation (5). Where, $te_i$ and $tl_i$ is the earliest and latest service start time at node $i$.

$$t_{e_i} \sum_{j \epsilon V} \alpha_{ij}^u \leq \tau_i^u \leq t_{l_i} \sum_{j \epsilon V} \alpha_{ij}^u \qquad \forall i \in K, \forall u \in \chi \qquad (5)$$

Constraint five ensures time feasibility of arcs leaving node $i$ as mentioned in equation (6). Wherein, $t_{ij}$ is the travel time from nodes $i$ to $j$. $ts_i$ is the service time at node $i$.

$$\tau_i^u + \left(t_{ij} + t_{si}\right)\alpha_{ij}^u - l_0(1 - \alpha_{ij}^u) \le \tau_j^u \qquad \forall j \in V, \forall u \in \chi \qquad (6)$$

Constraint six enforces remaining charge (energy) feasibility for arcs leaving node *i* as mentioned in equation (7). Wherein, *H* is charge consumption (kWh/km) rate. *Q* is the total battery capacity of each EV.

$$0 \le \theta_j^u(t) \le \theta_i^u(t) - (H.d_{ij} + e_i)\alpha_{ij}^u + Q\left(1 - \alpha_{ij}^u\right),$$

$$\forall i \in K, \forall u \in \chi, , \ i \ne j, \ \forall t$$

$$e_i = \{0, \forall i \in K\} \ or \ \{-R_{ci}t_{ci}^u, \forall i \in \mathcal{F}\} \ or \ \{R_{di}t_{di}^u, \forall i \in \mathrm{P}\}$$

$$or \ \{ev_{di}^u(t) - ev_{ci}^u(t), \forall i \in \mathrm{A} \} \qquad (7)$$

Constraints seven and eight enforce that the time duration of charging and discharging of any EV *u* should not exceed the respective service time $\zeta u i$ and $\gamma u i$ at charging and discharging node i as represented in equations (8) and (9).

$$t_{ci}^u \le \zeta_j^u \ \sum_{j\epsilon V} \alpha_{ij}^u, \qquad\qquad \forall i \in \mathcal{F}, \forall u \in \chi \qquad (8)$$

$$t_{di}^u \le \gamma_j^u \ \sum_{j\epsilon V} \alpha_{ij}^u, \qquad\qquad \forall i \in P, \forall u \in \chi \qquad (9)$$

In a second routine, the cost of energy purchased across various sources is optimized, while meeting the overall enterprise demand. It is given by:

$$u^P = \min_{s.} \left\{ \sum_{i\epsilon \mathrm{A}} \sum_{t\epsilon T} C(t)^T s_i(t) + C_{deg}^b \left(bd_i^b(t) + bc_i^b(t)\right) + \right.$$

$$\left. \cdots \frac{k}{2}(\sigma^m(t))^2(s^m(t))^2 + \sum_{u\epsilon x} \sum_{t\epsilon T} C_{deg}^u \left(ev_{d_i}^b(t) + ev_{c_i}^b(t)\right)\right\} \qquad (10)$$

wherein, at the enterprise node, C(t) T is the procurement cost (per kWh) from multiple sources; *C b deg* and *C u deg* are the degradation cost of the enterprise and EV battery, respectively; and k is the factor to control the weight of the market price variance risk $\sigma$ *m(t)*.

It is assumed here that the EV routes are given by the first routine. Constraint ten ensures that the energy demand and supply for the enterprise is maintained as represented by equation (11). The total procured power should be equal to the enterprise demand *Di(t)*:

$$1^T s_i(t) + \left(bd_i^b(t) + bc_i^b(t)\right) + \sum_{u\epsilon x} \left(ev_{d_i}^b(t) + ev_{c_i}^b(t)\right) = D_i(t)$$

$$\forall i \in \mathrm{T}, i \in A \qquad (11)$$

Constraints eleven and twelve ensure that procurement from external and captive renewable (solar PV) plants are within their generation limits *PV exmax i(t)* and *PVinmax i(t)*, respectively.

$$s_i^{pv_{ex}}(t) \le PVex_i^{max}(t) \qquad \forall i \in \mathrm{T}, i \in A \qquad (12)$$

$$s_i^{pv_{in}}(t) \le PVin_i^{max}(t) \qquad \forall i \in \mathrm{T}, i \in A \qquad (13)$$

Similarly, constraints thirteen and fourteen ensure that EVs charge and discharge as per the prescribed rates, but subject to their availability at that node. It is indicated by $\beta$ *u i(t)*, which is either 1 (when EV *u* is available for charging or discharging at node *i* at time *t*), or 0 (otherwise).

$$ev_{d_i}^u(t) \le R_{d_i}^u(SoC) \times \beta_i^u(t) \qquad\qquad \forall i \in \mathrm{T}, i \in A \qquad (14)$$

$$ev_{c_i}^u(t) \leq R_{c_i}^u(SoC) \times \beta_i^u(t) \qquad \forall i \in \mathrm{T}, i \in A \qquad (15)$$

And, constraints fifteen and sixteen enforce state of charge (SoC) feasibility (EVs) at enterprise node as represented by equations (16), (17) and (18).

$$\theta_0^u(t) = \left(ev_{c_i}^u(t) - ev_{d_i}^u(t)\right)\beta_0^u(t), \qquad t \epsilon T \qquad (16)$$

$$\theta_1^u(t) = \begin{cases} \theta_{initial} + \theta_0^u(t), t = 0 \\ \theta_1^v(t-1) + \theta_0^u(t), t \neq 0 \end{cases} \qquad (17)$$

$$0 \leq \theta_0^v, \theta_1^v \leq Q^v \qquad (18)$$

Constraint eighteen determines the SoC of the enterprise battery, while Constraint nineteen ensures that it is maintained within its SoC limit as represented by equations (19) and (20).

$$bc_i^b(t) - bd_i^b(t) = \theta_i^b(t) - \theta_i^b(t-1) \qquad \forall t \in \mathrm{T}, i \in A \qquad (19)$$

$$(\theta_i^b)^{min} \leq \theta_i^b(t) \leq (\theta_i^b)^{max}, \qquad \forall t \in \mathrm{T}, i \in A \qquad (20)$$

Constraints twenty to twenty-three defines the complementarity conditions of charging-discharging of batteries and EVs, respectively, using binary variables Z and Y, as represented by equations (21), (22), (23) and (24).

$$bd_i^b(t) \leq R_d^b(SoC) \times Z_{t,i} \qquad \forall t \in \mathrm{T}, i \in A \qquad (21)$$

$$bc_i^b(t) \leq R_c^b(SoC) \times [1 - Z_{t,i}], \qquad \forall t \in \mathrm{T}, i \in A \qquad (22)$$

$$ev_{d_i}^u(t) \leq R_{d_i}^b(SoC) \times Y_t^u, \qquad \forall t \in \mathrm{T}, i \in A \qquad (23)$$

$$ev_{c_i}^u(t) \leq R_{c_i}^b(SoC) \times [1 - Y_t^u], \qquad \forall t \in \mathrm{T}, i \in A \qquad (24)$$

Therefore, in the MINLP, there are two systems that provide high quality solutions but are computationally slow on large problem sizes involving multiple power sources, and many vehicles and service locations. MINLP has many nonlinear terms and binary variables that depend on the number of EVs and location nodes. This makes it difficult to solve at scale, leading to extremely long delays (of the order of days) in computing the optimal solution.

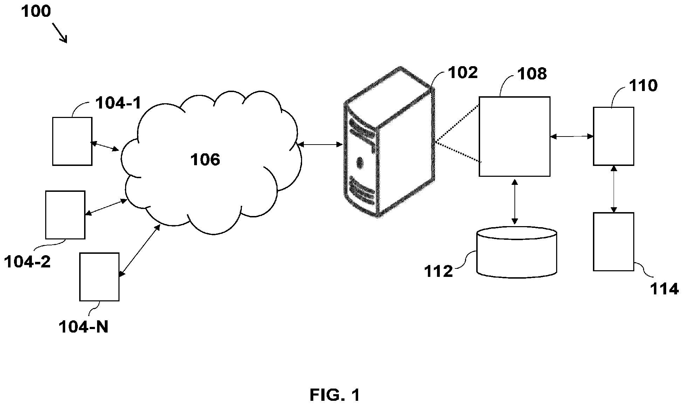

Referring now to the drawings, and more particularly to FIG. 1 through FIG. 3, where similar reference characters denote corresponding features consistently throughout the figures, there are shown preferred embodiments, and these embodiments are described in the context of the following exemplary system and/or method.

FIG. 1 illustrates a block diagram of a system 100 for an energy cost optimization framework for a logistic enterprise, according to some embodiments of the present disclosure. Although the present disclosure is explained considering that the system 100 is implemented on a server, it may be understood that the system 100 may comprise one or more computing devices 102, such as a laptop computer, a desktop computer, a notebook, a workstation, a cloud-based computing environment and the like. It will be understood that the system 100 may be accessed through one or more input/output interfaces 104-1, 104-2... 104-N, collectively referred to as I/O interface 104. Examples of the I/O interface 104 may include, but are not limited to, a user interface, a portable computer, a personal digital assistant, a handheld device, a smartphone, a tablet computer, a workstation, and the like. The I/O interface 104 is communicatively coupled to the system 100 through a network 106.

In an embodiment, the network 106 may be a wireless or a wired network, or a combination thereof. In an example, the network 106 can be implemented as a computer network, as one of the different types of networks, such as virtual private network (VPN), intranet, local area network (LAN), wide area network (WAN), the internet, and such. The network 106 may either be a dedicated network or a shared network, which represents an association of the different types of networks that use a variety of protocols, for example, Hypertext Transfer Protocol (HTTP), Transmission Control Protocol/Internet Protocol (TCP/IP), and Wireless Application Protocol (WAP), to communicate with each other. Further, the network 106 may include a variety of network devices, including routers, bridges, servers, computing devices, storage devices. The network devices within the network 106 may interact with the system 100 through communication links.

The system 100 supports various connectivity options such as BLUETOOTH®, USB, ZigBee, and other cellular services. The network environment enables connection of various components of the system 100 using any communication link including Internet, WAN, MAN, and so on. In an exemplary embodiment, the system 100 is implemented to operate as a stand-alone device. In another embodiment, the system 100 may be implemented to work as a loosely coupled device to a smart computing environment. Further, the system 100 comprises at least one memory 110 with a plurality of instructions, one or more databases 112, and one or more hardware processors 108 which are communicatively coupled with the at least one memory to execute a plurality of modules 114 therein. The components and functionalities of the system 100 are described further in detail.

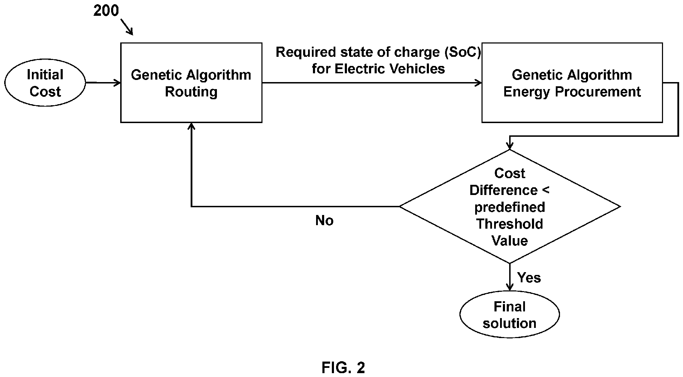

FIG. 2 is a functional block diagram 200 to illustrate the system 100 for an optimization framework to overcome a cyclic dependency between cost of power procurement and routing of one or more electric vehicles (EVs) of a logistic enterprise, according to some embodiments of the present disclosure. In one embodiment, the system 100 is configured for a meta-heuristic procedure based on the genetic algorithm (GA) to jointly optimize cost of power procurement and routing of the one or more EVs and jointly optimize them to minimize the overall bill of energy for the enterprise.

In one example, wherein a logistic enterprise is considered that consumes a large amount of electricity for its daily operations. The logistic enterprise procures power from multiple sources that include energy market, retail contracts, captive and third-party renewable plants. It runs a city-wide goods delivery operation using a fleet of EVs. It has access to (bidirectional) charging points across the city geography, either through direct ownership, or bilateral contracts with third-party charge point operators. The enterprise makes use of the time-varying tariff at these service points to make (dis) charging decisions for the EV fleet to optimize cost. EVs, beside regular deliveries, can be considered as energy carriers since they can move energy across city locations due to the virtue of their on-board battery, and are an additional power source for the enterprise itself. The enterprise also has on premise battery bank to absorb fluctuations arising from captive renewable energy generation, as well as for energy arbitrage. The aim is to reduce the cost of energy, while meeting the enterprise energy demand for its various operations.

In one embodiment, wherein different locations in a city are represented as a complete undirected graph:

$$G = (V, E) \hspace{3cm} (25)$$

wherein, the set of nodes is denoted by $V = \{v0\} \cup K \cup F \cup P \cup A$, and the set of edges connecting the nodes is denoted by E. $v0$ denotes the depot, where a homogeneous fleet of $u$ EVs represented by the set $X = \{x_1, ..., x_u\}$, always start their daily trip and return after their day's delivery is completed. $K = \{k_1, ..., k_m\}$ denotes the set of $m$ customers, where EVs need to deliver goods. $F = \{f_1, ..., f_0\}$ denotes the set of o third-party charging stations, where EVs can charge enroute during their deliveries. $P = \{p_1, ..., p_n\}$ denotes the set of $n$ discharging stations, where EVs need to deliver specific quanta of energy by discharging their batteries. $A = \{v_0, a_1, ..., a_z\}$ denotes the set of $z + 1$ enterprise (trading) nodes, where EVs can charge or discharge in a trading interval. Let $S_i = \{M, R, pv_{ex}, pv_{in}\}$ denotes the supply options at enterprise nodes $i \in A$, where M refers to the set of markets from where the enterprise nodes intend to buy power. R refer to the set of retailers, $pv_{in}$ refers to captive solar, and $pv_{ex}$ refers to third-party solar plants. It is to be noted that the enterprise is participating in a day-ahead market. For a delivery day, the set of trading intervals is defined as $T = \{t_1, ..., t_{tb}\}$, where $tb$ = 96-time blocks of 15 minutes each.

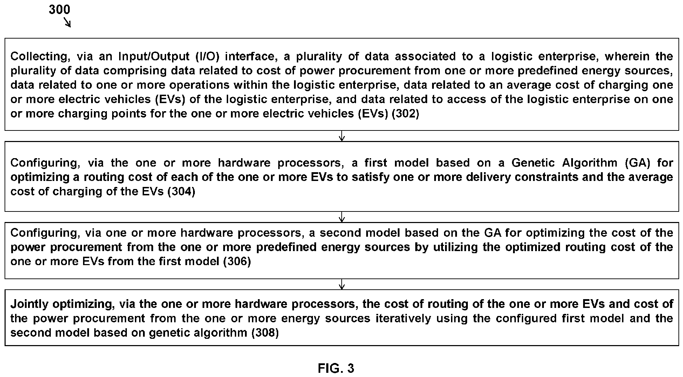

FIG. 3 is a flow diagram illustrating a processor-implemented method 300 for an energy cost optimization framework for a logistic enterprise implemented by the system 100 of FIG. 1, in accordance with an embodiment of the present disclosure. Functions of the components of the system 100 are now explained through steps of flow diagram in FIG. 3, according to some embodiments of the present disclosure.

Initially, at step 302 of the processor-implemented method 300, the one or more hardware processors 108 are configured by the programmed instructions to collect, via an Input/Output (I/O) interface, a plurality of data associated to a logistic enterprise. The plurality of data comprising data related to cost of power procurement from one or more predefined energy sources, data related to one or more operations within the logistic enterprise, data related to an average cost of charging one or more electric vehicles (EVs) of the logistic enterprise, and data related to access of the logistic enterprise on one or more charging points for the one or more electric vehicles (EVs).

At the next step 304 of the processor-implemented method 300, the one or more hardware processors 108 are configured by the programmed instructions to configure a first model based on a genetic algorithm (GA) for optimizing a routing cost of each of the one or more electric vehicles (EVs) to satisfy one or more delivery constraints and the average cost of charging of the one or more electric vehicles (EVs).

At the next step 306 of the processor-implemented method 300, the one or more hardware processors 108 are configured by the programmed instructions to configure a second model based on the genetic algorithm (GA) for optimizing the cost of the power procurement from the one or more predefined energy sources by utilizing the optimized routing cost of the one or more electric vehicles (EVs) from the first model, wherein each of the one or more EVs routes is fixed.

The outcome of second model is used as an input to the first model. Both models, the first model and the second model, are coupled GA modules exchange information between them in an iterative manner to derive a near optimal solution. Herein, an encoding scheme for representing chromosomes and fitness function for evaluating the goodness of the candidate solutions is described for the two GA modules. The objective is to minimize the fitness score in both cases, chromosomes with lower fitness score is considered better.

The routing chromosome ($cr$) is defined as the collection of routes of one or more EVs and their state of charge (SoC) levels arranged in a sequence. Its fitness score is obtained using:

$$f(cr) = d_1(cr) + c_1(cr) \qquad\qquad (26)$$

wherein the $d_1$($cr$) denotes distance travelled by the one or more EVs and $c_1$($cr$) denotes total energy obtained through charging for the collection of routes within a routing chromosome.

The procurement chromosome ($cp$) is defined as the collection of energy sources and the amount of energy procured from each source arranged in a sequence. Its fitness score is obtained using:

$$f(cp) = pr(cp) + \deg(cp) \qquad\qquad (27)$$

wherein the components *pr(cp)* and *deg(cp)*, respectively, denote the total cost of procured energy, and the total degradation cost of EV batteries for the collection of energy sources within a procurement chromosome.

The initial population is generated using the nearest neighbor rule (but by respecting the distance and service time constraints) in the routing GA, and the solution is improved using insertion heuristics. In the procurement GA, the initial population is randomly generated and is improved by making EVs charge, irrespective of the cost, if they do not have the required charge for routing. In each GA round, parents are selected using a binary tournament procedure where two chromosomes are selected at random, and the one with a lower fitness score is chosen. In routing GA, parents are crossed overusing either common nodes or arcs technique and is followed by removing solutions that do not visit customer nodes.

A uniform partially matched crossover approach is used in the procurement GA. The remaining chromosomes undergo mutation. A fixed population size is maintained for every generation and is controlled using an elitist selection procedure. In every iteration, the total SoC required for routing (from routing GA) and the average procurement cost at the enterprise node (from procurement GA) parameters are exchanged between the two GA modules to arrive at the final solution.

Finally, at the last step 308 of the processor-implemented method 300, the one or more hardware processors 108 are configured by the programmed instructions to jointly optimizing, via the one or more hardware processors, the cost of routing of the one or more electric vehicles (EVs) and cost of the power procurement from the one or more energy sources iteratively using the configured first model and the second model based on the genetic algorithm (GA).

**Experiment:**

A large enterprise campus located in one of the leading cities of the world is considered, whose daily average electricity consumption is 19 MWh. It has access to multiple electricity sources: (*i*) retail contract offering time of day-based tariff; (*ii*) day-ahead electricity market; (*iii*) captive solar plant with a peak installed capacity of 1 MWh; (*iv*) third-party solar contract with a peak installed capacity of 12 MWh. It has a fleet of EVs to deliver goods and energy within its network, which is also used for energy storage and arbitrage when available at the enterprise location, along with a captive battery system with an installed capacity of 500 kWh and power rating of 100 kW. A homogeneous EV fleet is considered where each EV has a battery of 200 kWh capacity, and mileage of 1 km/kWh. The rate of energy charge and discharge at the respective stations is taken as 1.25 kWh/min and 0.67 kWh/min. The Solomon dataset is modified to simulate the delivery network of 9/20/40 nodes, each comprising of 1 enterprise node, 75% customer nodes, and remaining nodes as third-party charging stations. Using this operation setup, the performance of proposed optimization framework is evaluated as shown below in Table 1 and Table 2.

**Table 1**

| Routing | | Procurement | | | | | |
|---|---|---|---|---|---|---|---|
| EVs | Nodes | Market | Contract | Int Solar | Ext Solar | EV Charge | EV Discharge |
| 2 | 9 | 3834.94 | 8055.03 | 5803.02 | 1388.76 | 321.47 | 199.72 |
| 5 | 9 | 3759.01 | 8267.69 | 5884.42 | 1279.02 | 398.1 | 167.96 |
| 10 | 9 | 3769.06 | 8314.46 | 5856.59 | 1287.31 | 398.68 | 131.26 |
| 25 | 9 | 3740.1 | 8479.41 | 5777.05 | 1582.19 | 618.75 | 0 |
| 50 | 9 | 3674.86 | 8478.22 | 5826.21 | 1599.46 | 618.75 | 0 |
| 100 | 9 | 3728.4 | 8476.21 | 5823.17 | 1550.97 | 618.75 | 0 |
| | | | | | | | |
| 2 | 20 | 3724.49 | 7968.22 | 5815.09 | 1581.87 | 330.95 | 201.28 |
| 5 | 20 | 3762.54 | 8136.33 | 5784.62 | 1519.02 | 401.75 | 159.24 |
| 10 | 20 | 3736.69 | 8280.55 | 5864.37 | 1366.64 | 381.99 | 93.74 |
| 25 | 20 | 3671.02 | 8621.24 | 5816.87 | 1469.62 | 618.75 | 0 |
| 50 | 20 | 3812.02 | 8393.42 | 5773.53 | 1599.78 | 618.75 | 0 |
| 100 | 20 | 3881.15 | 8372.9 | 5799.72 | 1524.98 | 618.75 | 0 |
| | | | | | | | |
| 5 | 40 | 3775.79 | 8194.55 | 5848.56 | 1391.78 | 409.03 | 158.35 |
| 10 | 40 | 3792.07 | 8237.99 | 5821.37 | 1446.25 | 375.17 | 37.49 |
| 25 | 40 | 3707.17 | 8599.33 | 5829.36 | 1442.89 | 618.75 | 0 |
| 50 | 40 | 3851.43 | 8433.1 | 5750.8 | 1543.42 | 618.75 | 0 |
| 100 | 40 | 3804.82 | 8574.79 | 5835.16 | 1363.98 | 618.75 | 0 |

**Table 2**

| Routing | | Solution cost | | Solution speed | |
|---|---|---|---|---|---|
| EVs | Nodes | Routing | Procurement | Routing | Procurement |
| 2 | 9 | 294.09 | 88342.33 | 0.652116667 | 153.886 |
| 5 | 9 | 513.99 | 88818.24 | 1.141583333 | 153.315 |
| 10 | 9 | 893.18 | 89438.8 | 1.856833333 | 154.64 |
| 25 | 9 | 1967.14 | 93394.82 | 11.98776667 | 153.04 |
| 50 | 9 | 3515.23 | 93105.18 | 29.72266667 | 153.29 |
| 100 | 9 | 6869.94 | 92913.04 | 86.41326667 | 160.782 |
| | | | | | |
| 2 | 20 | 644.49 | 88322.62 | 1.146316667 | 154.139 |
| 5 | 20 | 872.29 | 89296.57 | 2.2999 | 183.983 |
| 10 | 20 | 1244.18 | 89257.14 | 3.84205 | 191.603 |
| 25 | 20 | 2219.84 | 93185.05 | 26.62666667 | 180.69 |
| 50 | 20 | 3908.99 | 93339.44 | 44.25733333 | 178.92 |
| 100 | 20 | 7138.36 | 93321.43 | 229.8166667 | 237.029 |
| | | | | | |
| 5 | 40 | 1617.97 | 89340.76 | 4.192316667 | 217.883 |

(continued)

| Routing | | Solution cost | | Solution speed | |
|---|---|---|---|---|---|
| EVs | Nodes | Routing | Procurement | Routing | Procurement |
| 10 | 40 | 2056.29 | 89755.85 | 7.214 | 187.59 |
| 25 | 40 | 2178.95 | 93160.83 | 52.87333333 | 178.6 |
| 50 | 40 | 3870.09 | 93596.81 | 88.98383333 | 204.67 |
| 100 | 40 | 6037.57 | 92911.43 | 563.6835 | 162.14 |

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of the present disclosure herein address unresolved problems of cyclic dependency between cost of power procurement and routing of one or more electric vehicles (EVs) of a logistic enterprise. In one embodiment, the optimization framework comprises two independent routines, coupled through the exchange of parameter values. The first routine optimizes the routing cost of the one or more EVs to satisfy the delivery constraints by assuming that the average EV charging cost is known. This is given as input to a second routine that optimizes the electricity procurement cost from different energy sources by assuming that the one or more EVs routes are fixed. The output from the second routine is then given back as input to the first routine, and the procedure iterates till a stopping criteria is reached.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor-implemented method (300) comprising:

   collecting (302), via an Input/Output (I/O) interface, a plurality of data associated to a logistic enterprise, wherein the plurality of data comprising data related to cost of power procurement from one or more predefined energy sources, data related to one or more operations within the logistic enterprise, data related to an average cost of charging one or more electric vehicles (EVs) of the logistic enterprise, and data related to access of the logistic enterprise on one or more charging points for the one or more electric vehicles (EVs);
   configuring (304), via the one or more hardware processors, a first model based on a genetic algorithm (GA) for optimizing a routing cost of each of the one or more electric vehicles (EVs) to satisfy one or more delivery constraints and the average cost of charging of the one or more electric vehicles (EVs);
   configuring (306), via one or more hardware processors, a second model based on the genetic algorithm (GA) for optimizing the cost of the power procurement from the one or more predefined energy sources by utilizing the optimized routing cost of the one or more electric vehicles (EVs) from the first model, wherein each of the one or more EVs routes is fixed; and
   jointly optimizing (308), via the one or more hardware processors, the cost of routing of the one or more electric vehicles (EVs) and cost of the power procurement from the one or more energy sources iteratively using the configured first model and the second model based on genetic algorithm (GA).

2. The processor-implemented method as claimed in claim 1, further comprising:

   collecting routes of each of the one or more EVs;
   determining state of charge of each of the one or more EVs required for routing; and
   charging each of the one or more EVs irrespective of the cost of power procurement, if the one or more EVs do not have a predefined charge for routing.

3. The processor-implemented method as claimed in claim 1, wherein the routing cost includes total distance travelled by the one or more EVs and cost to charge-discharge.

4. A system (100) comprising:

   a memory (110) storing instructions;
   one or more Input/Output (I/O) interfaces (104); and
   one or more hardware processors (108) coupled to the memory (110) via the one or more I/O interfaces (104), wherein the one or more hardware processors (108) are configured by the instructions to:

      a plurality of data associated to a logistic enterprise, wherein the plurality of data comprising data related to cost of power procurement from one or more predefined energy sources, data related to one or more operations within the logistic enterprise, data related to an average cost of charging one or more electric vehicles (EVs) of the logistic enterprise, and data related to access of the logistic enterprise on one or more charging points for the one or more electric vehicles (EVs);
      configure a first model based on a genetic algorithm (GA) for optimizing a routing cost of each of the one or more electric vehicles (EVs) to satisfy one or more delivery constraints and the average cost of charging of the one or more electric vehicles (EVs);
      configure a second model based on the genetic algorithm (GA) for optimizing the cost of the power procurement from the one or more predefined energy sources by utilizing the optimized routing cost of the one or more electric vehicles (EVs) from the first model, wherein each of the one or more EVs routes is fixed; and
      jointly the cost of routing of the one or more electric vehicles (EVs) and cost of the power procurement from the one or more energy sources iteratively using the configured first model and the second model based on genetic algorithm (GA).

5. The system (100) as claimed in claim 4, wherein the one or more hardware processors (108) are configured by the instructions to:

collect routes of each of the one or more EVs;
determine state of charge of each of the one or more EVs required for routing; and
charge each of the one or more EVs irrespective of the cost of power procurement, if the one or more EVs do not have a predefined charge for routing.

6. The system as claimed in claim 4, wherein the routing cost includes total distance travelled by the one or more EVs and cost to charge-discharge.

7. One or more non-transitory machine-readable information storage mediums comprising one or more instructions which when executed by one or more hardware processors cause:

collecting, via an Input/Output (I/O) interface, a plurality of data associated to a logistic enterprise, wherein the plurality of data comprising data related to cost of power procurement from one or more predefined energy sources, data related to one or more operations within the logistic enterprise, data related to an average cost of charging one or more electric vehicles (EVs) of the logistic enterprise, and data related to access of the logistic enterprise on one or more charging points for the one or more electric vehicles (EVs);
configuring a first model based on a genetic algorithm (GA) for optimizing a routing cost of each of the one or more electric vehicles (EVs) to satisfy one or more delivery constraints and the average cost of charging of the one or more electric vehicles (EVs);
configuring a second model based on the genetic algorithm (GA) for optimizing the cost of the power procurement from the one or more predefined energy sources by utilizing the optimized routing cost of the one or more electric vehicles (EVs) from the first model, wherein each of the one or more EVs routes is fixed; and
jointly optimizing the cost of routing of the one or more electric vehicles (EVs) and cost of the power procurement from the one or more energy sources iteratively using the configured first model and the second model based on genetic algorithm (GA).

8. The one or more non-transitory machine-readable information storage mediums as claimed in claim 7, wherein the one or more instructions which when executed by the one or more hardware processors further cause:

collecting routes of each of the one or more EVs;
determining state of charge of each of the one or more EVs required for routing; and
charging each of the one or more EVs irrespective of the cost of power procurement, if the one or more EVs do not have a predefined charge for routing.

9. The one or more non-transitory machine-readable information storage mediums as claimed in claim 7, wherein the routing cost includes total distance travelled by the one or more EVs and cost to charge-discharge.

100

104-1

104-2

104-N

106

102

108

110

112

114

FIG. 1

FIG. 2

**300**

Collecting, via an Input/Output (I/O) interface, a plurality of data associated to a logistic enterprise, wherein the plurality of data comprising data related to cost of power procurement from one or more predefined energy sources, data related to one or more operations within the logistic enterprise, data related to an average cost of charging one or more electric vehicles (EVs) of the logistic enterprise, and data related to access of the logistic enterprise on one or more charging points for the one or more electric vehicles (EVs) (302)

Configuring, via the one or more hardware processors, a first model based on a Genetic Algorithm (GA) for optimizing a routing cost of each of the one or more EVs to satisfy one or more delivery constraints and the average cost of charging of the EVs (304)

Configuring, via one or more hardware processors, a second model based on the GA for optimizing the cost of the power procurement from the one or more predefined energy sources by utilizing the optimized routing cost of the one or more EVs from the first model (306)

Jointly optimizing, via the one or more hardware processors, the cost of routing of the one or more EVs and cost of the power procurement from the one or more energy sources iteratively using the configured first model and the second model based on genetic algorithm (308)

FIG. 3

**EUROPEAN SEARCH REPORT**

Application Number

EP 25 18 4372

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/203174 A1 (CELLA CHARLES HOWARD [US]) 20 June 2024 (2024-06-20)<br>* abstract *<br>* figures 4,12 *<br>* paragraph [0153] *<br>* paragraph [0157] - paragraph [0158] *<br>* paragraph [0162] - paragraph [0165] *<br>* paragraph [0587] *<br>-----| 1-9 | INV.<br>G06Q10/047<br>G01C21/34<br>G06N3/006<br>G06N3/045<br>G06N20/00<br>G06Q10/0631<br>G06Q30/0201<br>G06Q50/06<br>G06Q50/40<br>G07C5/00<br>G08G1/00 |
| | | | TECHNICAL FIELDS SEARCHED (IPC) |
| | | | G06Q<br>G08G<br>G01C<br>G07C<br>G06N |

The present search report has been drawn up for all claims

| Place of search | Date of completion of the search | Examiner |
|---|---|---|
| Munich | 11 September 2025 | Härdeman, David |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.............................................................................................
& : member of the same patent family, corresponding
    document

EPO FORM 1503 03.82 (P04C01)

**EP 4 723 001 A1**

## ANNEX TO THE EUROPEAN SEARCH REPORT
## ON EUROPEAN PATENT APPLICATION NO.

EP 25 18 4372

This annex lists the patent family members relating to the patent documents cited in the above-mentioned European search report.
The members are as contained in the European Patent Office EDP file on
The European Patent Office is in no way liable for these particulars which are merely given for the purpose of information.

11-09-2025

| Patent document cited in search report | Publication date | Patent family member(s) | Publication date |
|---|---|---|---|
| US 2024203174 A1 | 20-06-2024 | US 2021272394 A1 | 02-09-2021 |
| | | US 2023101183 A1 | 30-03-2023 |
| | | US 2024127639 A1 | 18-04-2024 |
| | | US 2024203174 A1 | 20-06-2024 |
| | | US 2024203175 A1 | 20-06-2024 |
| | | US 2024257583 A1 | 01-08-2024 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421075239